# EUROPÄISCHE PATENTSCHRIFT

(11) **EP 2 709 747 B1**
(45) Veröffentlichungstag und Bekanntmachung des Hinweises auf die Patenterteilung: **19.10.2016**
(21) Anmeldenummer: 12702478.4
(22) Anmeldetag: 26.01.2012
(51) Int. Cl.: B01D 53/14, F01D 11/06, F04D 17/12, F04D 29/10, F16J 15/16, F16J 15/40

(54) **GASSYSTEM ZUR VERDICHTUNG EINES PROZESSGASES**
GAS SYSTEM FOR COMPRESSING A PROCESS GAS
SYSTÈME À GAZ POUR COMPRIMER UN GAZ DE TRAITEMENT

(30) Priorität: 26.01.2011 DE 102011003173
(43) Veröffentlichungstag der Anmeldung: 26.03.2014
(73) Patentinhaber: Siemens Aktiengesellschaft, 80333 München (DE)
(72) Erfinder: ALFES, Ludger, 46282 Dorsten (DE); EISELE, Klaus, 47506 Neukirchen-Vluyn (DE); MÖNK, Thomas, 45964 Gladbeck (DE); REINHOLD, Markus, 40468 Düsseldorf (DE); SPANEL, Axel, 47228 Duisburg (DE)
(86) Internationale Anmeldenummer: PCT/EP2012/051214
(87) Internationale Veröffentlichungsnummer: WO 2012/101208

(56) Entgegenhaltungen:
- DE-A1- 2 411 243
- DE-A1-102009 017 614
- DE-B- 1 293 390

## Beschreibung

Die Erfindung betrifft ein Gassystem insbesondere ein Gassystem zur Verdichtung eines Prozessgases nach dem Oberbegriff des unabhängigen Patentanspruches 1.

Gassysteme zur Verdichtung von Prozessgas werden vielfältig in der Industrie eingesetzt. Dabei werden, zum Beispiel bei der Abscheidung von CO₂ aus der Abluft von Verbrennungsvorgängen, mehrere Verdichter beziehungsweise Kompressorstufen hintereinander angeordnet, wobei die Saugseite der jeweils nachfolgenden Kompressorstufe mit der Druckseite der vorherigen Kompressorstufe verbunden ist. Dadurch kann eine höhere Kompression als mit nur einer Kompressorstufe erreicht werden. Zwischen den einzelnen Kompressorstufen können Kühlanlagen, wie zum Beispiel Wärmetauscher, im Gassystem angeordnet sein, um den Gasstrom, der nach einer Komprimierung eine erhöhte Temperatur aufweist, vor der nächsten Kompressionsstufe wieder abzukühlen. Hochkomprimiertes Prozessgas stellt allerdings auch hohe Ansprüche an die Gasdichtheit des Gassystems. Eine mögliche Leckagequelle stellen die Durchtritte einer Welle, an der die Kompressorlaufräder befestigt sind, durch die die Laufräder umschließenden, drucktragenden Gehäuse dar. Das aus dieser Leckagequelle austretende Prozessgas wird aufgefangen und dem Gasstrom im Gassystem wieder zugeführt. Dabei muss darauf geachtet werden, dass der Druck des aufgefangenen Prozessgases aus der Leckage größer ist als der Druck des Prozessgases an der Stelle des Gassystems, an der das aufgefangene Prozessgas dem Gassystem wieder zugeführt wird. Um Leckagen in diesem Bereich weiter zu minimieren, sind die Außenräume um die Wellendurchtritte durch ein weiteres Gehäuse umgeben, in dem sich ein Sperrgas befindet. Als Sperrgas kann dabei beispielsweise N₂ oder Luft eingesetzt werden. Dieses Sperrgas steht unter einem so hohen Druck, dass ein Ausströmen des Prozessgases durch die Wellendurchtritte unterbunden wird. Jedoch kann es vorteilhaft sein, die Leckage von Prozessgas an den Wellendurchtritten nicht vollständig zu verhindern. Es ist bekannt, das Gemisch aus Sperr- und Prozessgas aufzufangen. Das aufgefangene Gemisch wird dann im Weiteren in die Umwelt entlassen, oder, falls zum Beispiel das Prozess und/oder das Sperrgas toxisch und/oder brennbar ist, in einem gesonderten Verfahren entsorgt. Das im Gasgemisch enthaltene Prozessgas geht dabei verloren.

Aus der DE 102009017614 A1 und der DE 2411 243 A1 sind Systeme der eingangs definierten Art bekannt.

Die Aufgabe der Erfindung ist es, ein Gassystem zu schaffen, bei dem verminderte, insbesondere keine, Verluste an Prozessgas auftreten und das dadurch eine höhere Effizienz aufweist und das sich durch eine geringe beziehungsweise nicht vorhandene Umweltbelastung auszeichnet.

Diese Aufgaben werden erfindungsgemäß durch ein Gassystem mit den Merkmalen gemäß dem unabhängigen Patentanspruch 1 gelöst. Weitere Merkmale und Details der Erfindung ergeben sich aus den Unteransprüchen, der Beschreibung und den Figuren.

Die Aufgabe wird gemäß der Erfindung durch ein Gassystem mit einer ersten Kompressorstufe zur Verdichtung eines Prozessgases gelöst. Die erste Kompressorstufe des Gassystems weist dabei eine Saugseite und eine Druckseite auf. Ferner ist bei dem erfindungsgemäßen Gassystem ein Sperrgas außerhalb der ersten Kompressorstufe zur Verhinderung eines Austretens von Prozessgas aus Leckagen der ersten Kompressorstufe vorgesehen. Das Sperrgas befindet sich dabei in einem Gehäuse, das den Wellendurchtritt der ersten Kompressorstufe umgibt. Auch weist das erfindungsgemäße Gassystem eine zweite Leitung zur Abführung eines aus dem Gassystem austretenden Gasgemisches, bestehend zumindest aus Prozessgas und Sperrgas, auf, wobei die zumindest eine zweite Leitung zur Rückführung des austretenden Gasgemisches zur Saugseite der ersten Kompressorstufe und/oder zu einer Stelle im Gassystem vor der ersten Kompressorstufe ausgestaltet ist. Zum Auffangen des Gemisches aus zumindest Sperrgas und Prozessgas können Vorrichtungen wie zum Beispiel eine oder mehrere Auffangsysteme vorgesehen sein.

Das erfindungsgemäße Gassystem weist dabei den Vorteil auf, dass ein Gasgemisch, bestehend zumindest aus Prozessgas und Sperrgas, in das Gassystem wieder zurückgeführt werden kann. Dadurch geht kein im Gasgemisch vorhandenes Prozessgas verloren, die Effizienz des Gassystems kann somit gesteigert werden. Durch die Rückführung des Gasgemisches wird ferner eine Umweltbelastung vermieden oder bei zum Beispiel toxischen Prozessgasen können zusätzlicher Aufwand durch eine getrennte Verwahrung des Gasgemisches, bestehend aus Prozessgas und Sperrgas, vermieden und somit Kosten eingespart werden.

Weiterhin ist nach der Erfindung bei dem erfindungsgemäßen Gassystem zumindest eine erste Leitung zur Rückführung von aus Leckagen des Gassystems, die sich hinter der ersten Kompressorstufe befinden, austretendem Prozessgas zu der Saugseite der ersten Kompressorstufe vorgesehen sein. Ein derartiges Gassystem weist dabei den Vorteil auf, dass sämtliches Prozessgas, das das Gassystem mit der ersten Kompressorstufe durch Leckagen verlässt, durch die erste Leitung rückgeführt wird und insbesondere auch ein Gasgemisch, bestehend zumindest aus Prozessgas und Sperrgas, ebenfalls in das Gassystem wieder zurückgeführt wird. Dadurch geht kein Prozessgas verloren, so dass die Effizienz des Gassystems weiter gesteigert werden kann.

In einer besonders bevorzugten Weiterentwicklung der Erfindung kann vorgesehen sein, dass zumindest eine zweite Kompressorstufe vorgesehen ist, die in Reihe zur ersten Kompressorstufe angeordnet ist, wobei jede Kompressorstufe eine Saugseite und eine Druckseite umfasst und das Sperrgas außerhalb jeder Kompressorstufe zur Verhinderung eines Austretens von Prozessgas aus Leckagen der Kompressorstufen vorgesehen ist. Ferner kann vorgesehen sein, dass die zumindest eine zweite Leitung zur Rückführung des aus dem Gassystem austretenden Gasgemisches zur Saugseite einer Kompressorstufe ausgestaltet ist. Insbesondere kann vorgesehen sein, dass die zumindest eine zweite Leitung zur Rückführung des aus dem Gassystem austretenden Gasgemisches zur Saugseite der ersten Kompressorstufe und/oder zu der Stelle im Gassystem vor der ersten Kompressorstufe ausgestaltet ist. Durch die Verwendung von mehreren, hintereinandergeschalteten, Kompressorstufen, insbesondere zwei oder mehr Kompressorstufen, kann eine höhere Verdichtung des Prozessgases erreicht werden.

Zusätzlich kann bei dem erfindungsgemäßen Gassystem vorgesehen sein, dass erste Leitungen zur Rückführung von aus Leckagen des Gassystems, die sich hinter jeder Kompressorstufe befinden, austretendem Prozessgas zu der Saugseite zumindest einer Kompressorstufe vorgesehen sind.

Bei derart ausgebildeten Gassystemen kann reines Prozessgas aufgefangen und mit Hilfe von ersten Leitungen zu der Saugseite zumindest einer Kompressorstufe rückgeführt werden. Dabei können alle ersten Leitungen zur Saugseite der ersten Kompressorstufe gelegt sein, aber alternativ auch zu den Saugseiten einer Kompressorstufe oder mehrerer weiterer Kompressorstufen. Bei der Planung des Gassystems ist dabei sicherzustellen, dass die ersten Leitungen dabei immer von Leckagen hinter einer Kompressorstufe zu einer Saugseite einer Kompressorstufe führen, die sich im Gasfluss vor dieser Leckage befindet. Ferner kann ein Gasgemisch, bestehend zumindest aus Prozessgas und Sperrgas, an allen Kompressorstufen aufgefangen und zur Saugseite einer Kompressorstufe, insbesondere der ersten Kompressorstufe, geleitet werden. Somit kann ein Verlust an Prozessgas vermieden und damit die Effizienz des Gassystems gesteigert werden.

Alternativ kann das Gasgemisch durch die zumindest eine zweite Leitung zu einer Stelle im Gassystem vor der ersten Kompressorstufe ausgestaltet sein. Insbesondere kann zum Beispiel bei CO₂ Absorbern in industriellen Anlagen das Gasgemisch dort wieder eingespeist werden, das Prozessgas (CO₂) wird in den Absorbern von dem Sperrgas gereinigt und dem Gassystem zur Kompression wieder zugeführt. Auch dadurch wird eine Effizienzsteigerung nebst Schonung der Umwelt erreicht.

Ferner kann bei einem erfindungsgemäßen Gassystem vorgesehen sein, dass die erste Kompressorstufe und/oder dass wenigstens eine der zumindest einen zweiten Kompressorstufe ein Turbogetriebeverdichter ist. Bei einem Turbogetriebeverdichter sind mehrere einzelne kleine Verdichterstufen in einem Gehäuse derart gruppiert, dass die einzelnen kleinen Verdichter parallele Wellen aufweisen, die von mindestens einem großen Antriebszahnrad, dem Getriebe, angetrieben werden. Ein Turbogetriebeverdichter ermöglicht damit eine besonders kompakte und somit platzsparende Bauweise eines erfindungsgemäßen Gassystems.

Ferner kann bei einem erfindungsgemäßen Gassystem vorgesehen sein, dass die Stelle im Gassystem vor der ersten Kompressorstufe ein Absorber, insbesondere ein CO₂ Absorber, ist. Diese Ausgestaltung des erfindungsgemäßen Gassystems erlaubt zum Beispiel den Einsatz des erfindungsgemäßen Gassystems zur Abscheidung von CO₂ aus Abgasen von Industrieanlagen. Insbesondere hier ist es wichtig, kein Prozessgas, insbesondere CO₂, in die Umwelt zu entlassen. Um als hochkomprimiertes Prozessgas am Ende des Gassystems möglichst reines CO₂ zu erhalten, wird in dieser Ausführungsform des erfindungsgemäßen Gassystems das Gemisch aus Prozessgas und Sperrgas direkt in den CO₂ Abscheideprozess im CO₂ Absorber eingespeist. Dadurch wird das Prozessgas, insbesondere CO₂, vom Sperrgas getrennt und dem Gassystem wieder zur Komprimierung zugeführt. Dadurch wird ein besonders hoher Reinheitsgrad an Prozessgas und damit eine besonders gute Effektivität des Gassystems erreicht.

Die Erfindung und ihre Weiterbildungen sowie deren Vorteile werden nachfolgen anhand der Zeichnungen näher erläutert. Es zeigen jeweils schematisch:
- Figur 1: eine Ansicht einer beispielhaften Ausgestaltung eines Gassystems, das nach dem erfindungsgemäßen Konstruktionsprinzip ausgebildet ist, mit acht Kompressorstufen;
- Figur 2: eine Ansicht einer beispielhaften Ausgestaltung eines Gassystems, das nach dem erfindungsgemäßen Konstruktionsprinzip ausgebildet ist, mit einer Kompressorstufe.

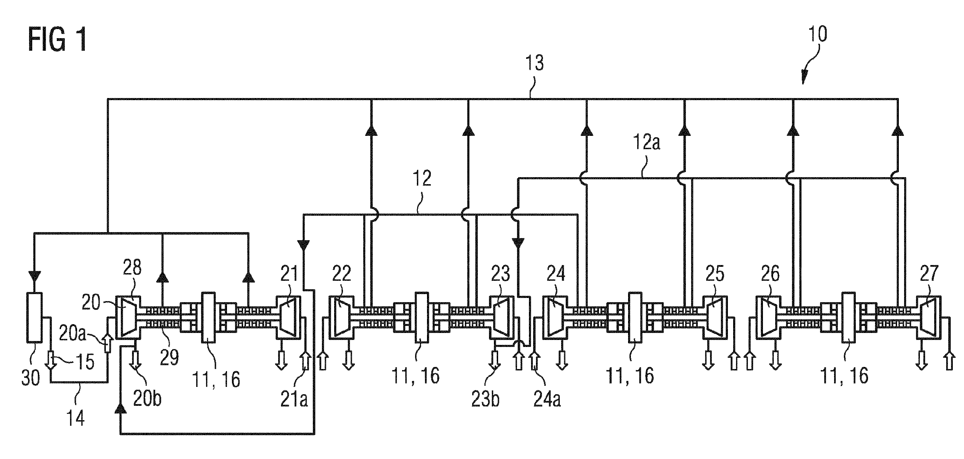

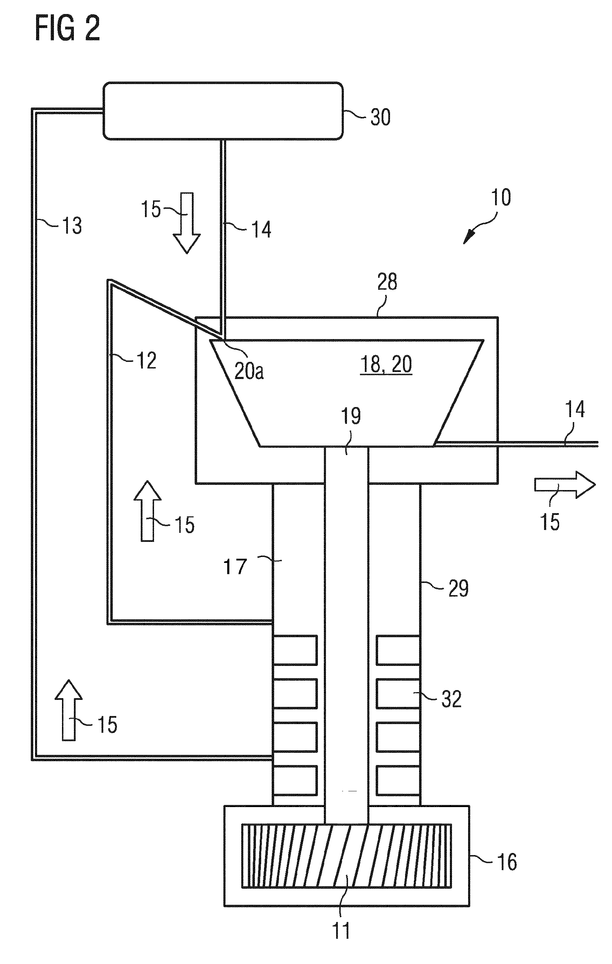

Elemente mit gleicher Funktion und Wirkungsweise sind in den Figuren 1 und 2 jeweils mit denselben Bezugszeichen versehen.

Figur 1 zeigt eine schematische Ansicht einer beispielhaften Ausgestaltung eines erfindungsgemäßen Gassystems 10, wobei das Gassystem 10 acht Kompressorstufen 20-27 aufweist. Jede der Kompressorstufen 20 bis 27 weist je eine Saugstufe (20a bis 27a) und eine Druckstufe (20b bis 27b) auf, von denen die in dieser Beschreibung erwähnten in Fig. 1 bezeichnet sind.

Die Kompressorstufen 20-27 sind dabei nacheinander geschaltet und durch Gasleitungen 14 verbunden, wobei nur die Gasleitung 14 zur ersten Kompressorstufe 20 abgebildet ist. Es sind jeweils die Druckseiten 20b-26b mit den Saugseiten 21a-27a verbunden. Die Gasflussrichtung 15, durch Pfeile angedeutet, wobei nur der erste Pfeil markiert ist, führt so durch das gesamte Gassystem 10, wobei das Prozessgas 18 immer weiter verdichtet wird. In dem gezeigten Ausführungsbeispiel werden jeweils zwei Kompressorstufen (20 und 21, 22 und 23, 24 und 25, 26 und 27) durch je eine gemeinsame Getriebewelle 11 in einem gemeinsamen Getriebegehäuse 16 angetrieben. Ferner weist jede der Kompressorstufen 20 bis 27 ein Verdichtergehäuse 28 und ein Wellendichtungsgehäuse 29 auf, die exemplarisch an der Kompressorstufe 20 bezeichnet sind.

Leckagen des Prozessgases 18 nach den Prozessorstufen 22, 23 und 24 werden durch eine erste Leitung 12 zur Druckseite 20b der Kompressorstufe 20 und damit zur Saugseite 21a der Kompressorstufe 21 geleitet. Leckagen des Prozessgases 18 nach den Kompressorstufen 25, 26 und 27 werden durch die Leitung 12a auf die Druckseite 23b der Kompressorstufe 23 und damit auf die Saugseite 24a der Kompressorstufe 24 geleitet. Dieses Leitungsdesign trägt dabei dem bereits erhöhten Druck des Prozessgases 18 bei den Kompressorstufen Rechnung, die in Gasflussrichtung 15 stromabwärts aufgebaut sind. Die Leitung, die die optional die Leckagen beziehungsweise austretendes Prozessgas 18 der beiden ersten Kompressorstufen 20 und 21 auf die Saugseite 20a der ersten Kompressorstufe 20 leitet,

ist nicht gezeigt. Jede der vier Getriebewellen 11 ist in einem Getriebegehäuse 16 angeordnet. Sie können in einer alternativen Ausführungsform auch in einem gemeinsamen Getriebegehäuse 16 angeordnet sein. Die Wellendurchtritte durch die Getriebegehäuse 16 und durch die die Laufräder umschließenden Verdichtergehäuse 28 sind mit Wellendichtungsgehäusen 29 umgeben, die mit Sperrgas 17, das unter erhöhtem Druck steht, gefüllt sind. Leckagen der Wellendichtungsgehäuse 29, aus denen ein Gasgemisch aus Prozessgas 18 und Sperrgas 17 ausströmt, werden aufgefangen und durch eine zweite Leitung 13 zu einem CO₂-Absorber 30 rückgeführt, der sich im Gassystem 10 vor der ersten Kompressorstufe 20 befindet. Im CO₂-Absorber 30 wird das Prozessgas, insbesondere CO₂, vom Sperrgas 17 gereinigt und wieder über die Gasleitung 14 der ersten Kompressorstufe 20 zugeführt. Durch dieses Abdichtungsdesign geht kein Prozessgas 18 verloren und die Effektivität des gesamten Gassystems wird dadurch gesteigert.

In der Figur 2 ist eine Ansicht einer beispielhaften Ausgestaltung eines Gassystems 10, das nach dem erfindungsgemäßen Konstruktionsprinzip ausgebildet ist, mit einer Kompressorstufe 20 gezeigt. Die abgebildete Kompressorstufe 20 kann dabei auch die erste von mehreren Kompressorstufen sein. Die Kompressorstufe 20 wird über eine Getriebewelle 11 angetrieben, die sich in einem Getriebegehäuse 16 befindet. Das Getriebegehäuse 16 ist mit dem Verdichtergehäuse 28 durch ein Wellendichtungsgehäuse 29 verbunden, das Elemente 32 zur Beeinflussung des Drucks und des Volumenstroms von Prozessgas 18, Sperrgas 17 und deren Gemisch enthält. Vor und hinter der Kompressorstufe 20 befinden sich Gasleitungen 14, die Gasflussrichtung 15 ist durch einen Pfeil symbolisiert. Prozessgas 18, das nach der Kompressorstufe 20 aus Leckagen austritt, wird aufgefangen und durch eine erste Leitung 12 zur Saugseite 20a der Kompressorstufe 20 geleitet. Um einen Ausfluss von Prozessgas 18 durch Leckagen an den Durchtritten der Welle 19 durch das Verdichtergehäuse 28 möglichst zu vermeiden, befindet sich im Wellendichtungsgehäuse 29 ein Sperrgas 17. Dieses Sperrgas 17 befindet sich auf einem Druckniveau, das dem Druck des Prozessgases 18 in der Kompressorstufe 20 angepasst ist. Eine mögliche Zuleitung, mit der das Sperrgas 17 im Wellendichtungsgehäuse eingebracht werden kann, ist nicht mit abgebildet. Austretendes Prozessgas 18 vermischt sich im Welldichtungsgehäuse 29 mit dem Sperrgas 17. Das Gemisch aus Sperrgas 17 und Prozessgas 18 wird aufgefangen und über eine zweite Leitung 13 ebenfalls dem Gassystem 10, z.B. einem Absorber 30 zugeführt. Durch dieses Abdichtungsdesign gelangt kein Prozessgas 18 in die Umwelt oder muss aufwändig entsorgt werden.

## Patentansprüche

1. Gassystem (10) aufweisend eine erste Kompressorstufe (20) zur Verdichtung eines Prozessgases (18), wobei die erste Kompressorstufe (20) eine Saugseite (20a) und eine Druckseite (20b) umfasst, und ein Sperrgas (17) außerhalb der ersten Kompressorstufe (20) zur Verhinderung eines Austretens von Prozessgas (18) aus Leckagen der ersten Kompressorstufe (20), aufweisend zumindest eine zweite Leitung (13) zur Abführung eines aus dem Gassystem (10) austretenden Gasgemisches bestehend zumindest aus Prozessgas (18) und Sperrgas (17),
wobei die zumindest eine zweite Leitung (13) zur Rückführung des austretenden Gasgemisches zur Saugseite (20a) der ersten Kompressorstufe (20) und/oder zu einer Stelle im Gassystem (10) vor der ersten Kompressorstufe (20) ausgestaltet ist,
**dadurch gekennzeichnet, dass**
zumindest eine erste Leitung (12) zur Rückführung von aus Leckagen des Gassystems (10), die sich hinter der ersten Kompressorstufe (20) befinden, austretendem Prozessgas (18) zu der Saugseite (20a) der ersten Kompressorstufe (20) vorgesehen ist.

2. Gassystem (10) nach Anspruch 1,
**dadurch gekennzeichnet, dass**
zumindest eine zweite Kompressorstufe (21-27) vorgesehen ist, die in Reihe zur ersten Kompressorstufe (20) angeordnet ist, wobei jede Kompressorstufe (20-27) eine Saugseite (20a-27a) und eine Druckseite (20b-27b) umfasst, dass Sperrgas (17) außerhalb jeder Kompressorstufe (21-27) zur Verhinderung eines Austretens von Prozessgas (18) aus Leckagen der Kompressorstufen (21-27) vorgesehen ist, dass die zumindest eine zweite Leitung (13) zur Rückführung des aus dem Gassystem (10) austretenden Gasgemisches zur Saugseite (20a-27a) einer Kompressorstufe (21-27), insbesondere der ersten Kompressorstufe (20), und/oder zu der Stelle im Gassystem (10) vor der ersten Kompressorstufe (20) ausgestaltet ist.

3. Gassystem (10) nach Anspruch 2,
**dadurch gekennzeichnet, dass**
erste Leitungen (12,12a) zur Rückführung von aus Leckagen des Gassystems (10), die sich hinter jeder Kompressorstufe (21-27) befinden, austretendem Prozessgas (18) zu der Saugseite (20a-27a) zumindest einer Kompressorstufe (21-27) vorgesehen sind.

4. Gassystem (10) nach wenigstens einem der vorhergehenden Ansprüche,
**dadurch gekennzeichnet, dass**
die erste Kompressorstufe (20) und/oder dass wenigstens eine der zumindest einen zweiten Kompressorstufen (21-27) ein Turbogetriebeverdichter ist.

5. Gassystem (10) nach wenigstens einem der vorhergehenden Ansprüche,
**dadurch gekennzeichnet, dass**
die Stelle im Gassystem (10) vor der ersten Kompressorstufe (20) ein Absorber, insbesondere ein CO₂-Absorber (30), ist.

## Claims

1. Gas system (10) having a first compressor stage (20) for compressing a process gas (18), wherein the first compressor stage (20) comprises an intake side (20a) and a pressure side (20b), and a seal gas (17) outside the first compressor stage (20) in order to prevent process gas (18) from issuing from leaks in the first compressor stage (20), having at least one second line (13) for returning a gas mixture issuing from the gas system (10), this mixture consisting at least of process gas (18) and seal gas (17), wherein the at least one second line (13) is configured for returning the issuing gas mixture to the intake side (20a) of the first compressor stage (20) and/or to a location in the gas system (10) upstream of the first compressor stage (20), **characterized in that** at least one first line (12) is provided for returning process gas (18) issuing from leaks in the gas system (10)
- these leaks being located downstream of the first compressor stage (20) - to the intake side (20a) of the first compressor stage (20).

2. Gas system (10) according to Claim 1,
**characterized in that**
at least one second compressor stage (21-27) is provided which is arranged in series with the first compressor stage (20), wherein each compressor stage (20-27) comprises an intake side (20a-27a) and a pressure side (20b-27b), **in that** seal gas (17) is provided outside each compressor stage (21-27) in order to prevent process gas (18) from issuing from leaks in the compressor stages (21-27), **in that** the at least one second line (13) is configured for returning the gas mixture issuing from the gas system (10) to the intake side (20a-27a) of a compressor stage (21-27), in particular the first compressor stage (20), and/or to the location in the gas system (10) upstream of the first compressor stage (20).

3. Gas system (10) according to Claim 2,
**characterized in that**
first lines (12, 12a) are provided for returning process gas (18) issuing from leaks in the gas system (10) - these leaks being located downstream of each compressor stage (21-27) - to the intake side (20a-27a) of at least one compressor stage (21-27).

4. Gas system (10) according to at least one of the preceding claims,
**characterized in that**
the first compressor stage (20) and/or that at least one of the at least one second compressor stages (21-27) is a geared turbocompressor.

5. The gas system (10) according to at least one of the preceding claims,
**characterized in that**
the location in the gas system (10) upstream of the first compressor stage (20) is an absorber, in particular a CO₂ absorber (30).

## Revendications

1. Système ( 10 ) à gaz ayant un premier étage ( 20 ) de compresseur pour comprimer un gaz ( 18 ) de processus, le premier étage ( 20 ) de compresseur comprenant un côté ( 20a ) d'aspiration et un côté ( 20b ) de refoulement et un gaz ( 17 ) d'arrêt à l'extérieur du premier étage ( 20 ) de compresseur pour empêcher une sortie de gaz ( 18 ) de processus provenant des fuites du premier étage ( 20 ) de compresseur, comportant au moins un deuxième conduit ( 13 ) pour évacuer un mélange gazeux sortant du système ( 10 ) à gaz et constitué au moins du gaz ( 18 ) de processus et du gaz ( 17 ) d'arrêt,
dans lequel au moins le deuxième conduit ( 13 ) est conformé pour retourner le mélange gazeux sortant au côté ( 20a ) d'aspiration du premier étage ( 20 ) de compresseur et/ou à un point du système ( 10 ) à gaz en amont du premier étage ( 20 ) de compresseur,
**caractérisé en ce que**
il est prévu au moins un premier conduit ( 12 ) de retour au côté ( 20a ) d'aspiration du premier étage ( 20 ) de compresseur du gaz ( 18 ) de processus sortant, provenant des fuites du système ( 10 ) à gaz, qui ont lieu en aval du premier étage ( 20 ) de compresseur.

2. Système ( 10 ) à gaz suivant la revendication 1,
**caractérisé en ce que**
il est prévu au moins deuxième étage ( 21-27 ) de compresseur, qui est monté en série avec le premier étage
( 20 ) de compresseur, chaque étage ( 20-27 ) de compresseur comprenant un côté ( 20a-27a ) d'aspiration et un côté ( 20b-27b ) de refoulement,s **en ce qu'**il est prévu du gaz ( 17 ) d'arrêt à l'extérieur de chaque étage ( 21-27 ) de compresseur pour empêcher une sortie de gaz ( 18 ) de processus provenant des fuites des étages ( 21-27 ) de compresseur, **en ce qu'**au moins deuxième conduit ( 13 ) est conformé pour recycler le mélange gazeux sortant du système ( 10 ) à gaz au côté ( 20-27a ) d'aspiration d'un étage ( 21-27 ) de compresseur, notamment du premier étage ( 20 ) de compresseur, et/ou au point du système ( 10 ) à gaz en amont du premier étage ( 20 ) de compresseur.

3. Système ( 10 ) à gaz suivant la revendication 2,
**caractérisé en ce que**
il est prévu des premiers conduits ( 12, 12a ) de recyclage, au côté ( 20-27a ) d'aspiration d'au moins un étage ( 21-27 ) de compresseur, du gaz ( 18 ) de processus sortant, provenant des fuites du système ( 10 ) à gaz, qui ont lieu en aval de chaque étage ( 21-27 ) de compresseur.

4. Système ( 10 ) à gaz suivant au moins l'une des revendications précédentes,
**caractérisé en ce que**
le premier étage ( 20 ) de compresseur et/ou au moins l'un des au moins deuxièmes étages ( 21-27 ) de compresseur est un turbocompresseur

5. Système ( 10 ) à gaz suivant au moins l'une des revendications précédentes,
**caractérisé en ce que**
le point du système ( 10 ) de gaz en amont du premier étage ( 20 ) de compresseur est un absorbeur, notamment un absorbeur ( 30 ) de CO₂-
